# EUROPÄISCHE PATENTSCHRIFT

(11) **EP 1 730 054 B1**
(45) Veröffentlichungstag und Bekanntmachung des Hinweises auf die Patenterteilung: **14.11.2007**
(21) Anmeldenummer: 05731932.9
(22) Anmeldetag: 22.03.2005
(51) Int. Cl.: B65G 17/06

(54) **PLATTENBANDFÖRDERER MIT SCHNELLMONTAGEEINRICHTUNG**
PLATE CONVEYOR WITH RAPID ASSEMBLY DEVICE
TRANSPORTEUR A PLATEAUX AVEC DISPOSITIF DE MONTAGE RAPIDE

(30) Priorität: 01.04.2004 DE 102004016059
(43) Veröffentlichungstag der Anmeldung: 13.12.2006
(73) Patentinhaber: Aumund-Fördererbau GmbH & Co. KG, 47495 Rheinberg (DE)
(72) Erfinder: DUFHAUS, Karl-Josef, 46519 Alpen (DE)
(74) Vertreter: Müller, Karl-Ernst
(86) Internationale Anmeldenummer: PCT/EP2005/003015
(87) Internationale Veröffentlichungsnummer: WO 2005/095236

(56) Entgegenhaltungen:
- DE-C- 955 578
- GB-A- 797 118
- US-A- 2 045 912
- US-A- 2 936 063

## Beschreibung

Die Erfindung betrifft einen Plattenbandförderer mit von einer Laschenkette getragenen, sich in Förderrichtung des Plattenbandförderers gegenseitig in ihrem Bodenbereich sowie mit ihren vertikal verlaufenden Seitenborden überlappenden und jeweils gleich ausgebildeten Platten, wobei die Laschenkette aus zwei parallel zueinander angeordneten und durch jeweils eine Abfolge von Innenlaschen und Außenlaschen gebildeten Kettensträngen besteht und die einander gegenüberliegenden Innenlaschen und Außenlaschen durch jeweils einen gemeinsamen, die Laschen in zugeordneten Öffnungen durchgreifenden Kettenbolzen verbunden sind und die Platten des Plattenbandförderers an den fortlaufenden Innenlaschen und Außenlaschen wenigstens eines der beiden Kettenstränge befestigt sind.

Ein Plattenbandförderer mit den vorgenannten Merkmalen ist in der US-A-29 36 063 wie auch in der DE 34 38 231 C2 beschrieben. Ein Problem bei derartigen Plattenbandförderern besteht bei deren Montage, soweit die Plattenbandförderer in vormontierten Teilabschnitten zum Einsatzort transportiert und dort zur Bildung des im Betrieb erforderlichen endlosen Fördererstranges miteinander verbunden werden müssen.

Der Erfindung liegt daher die Aufgabe zugrunde, einen Plattenbandförderer mit den eingangs genannten Merkmalen derart auszugestalten, dass seine Montage wie gegebenenfalls auch Demontage in einfacher Weise durchzuführen ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Herstellung eines endlosen Fördererstranges durch Verbindung der Endglieder wenigstens zweier vormontierter Teilabschnitte des Plattenbandförderers das erste Endglied des Teilabschnitts aus zwei parallel abragenden End-Innenlaschen mit der daran befestigten Platte besteht und das damit verbundene zweite Endglied von einer einseitig mit dem Kettenbolzen des zweiten Endgliedes verbundenen, von dem zweiten Endglied einseitig abragenden und mit der zugeordneten Platte vormontierten End-Außenlasche gebildet ist, und dass eine der End-Außenlasche gegenüberliegende Kettenlasche als Verschluss-Außenlasche ausgebildet ist, die mit ihrem einen Ende auf den die End-Außenlasche tragenden Kettenbolzen des zweiten Endgliedes aufsetzbar ist und mit einem an ihrem anderen Ende vormontierten Kettenbolzen die beiden abragenden Innenlaschen des ersten Endgliedes sowie das Ende der abragenden End-Außenlasche des zweiten Endgliedes durchgreift.

Mit der Erfindung ist der Vorteil verbunden, dass die einzelnen Teilabschnitte des Plattenbandförderers weitgehend vormontiert werden können und dass zum Zusammenfügen der Endglieder der miteinander zu verbindenden Teilabschnitte des Plattenbandförderers lediglich eine einzelne Verschluss-Außenlasche in den zunächst einseitig unvollständig belassenen Kettenstrang der zweisträngigen Laschenkette einzufügen ist. Soweit an der abragenden End-Außenlasche des Endgliedes eines Teilabschnitts des Plattenbandförderers die zugeordnete Platte mit ihren Seitenborden bereits angebracht ist, ergibt sich beim Zusammenfügen der beiden Endglieder der Teilabschnitte des Plattenbandförderers vor dem Einsetzen der Verschluss-Außenlasche bereits eine genaue Positionierung der Platten aufgrund deren gegenseitiger Überlappung, so dass während der eigentlichen Verbindungsmontage mittels Einsetzen der Verschluss-Außenlasche bereits eine exakte Ausrichtung der Endglieder der einander zugeordneten Teilabschnitte des Plattenbandförderers gegeben ist.

Nach einem Ausführungsbeispiel der Erfindung ist vorgesehen, dass die fortlaufenden Innenlaschen und Außenlaschen nur eines Kettenstranges mit einer Winkellasche zum Anschluss einer zugeordneten Platte versehen sind; in diesem Fall weist die Verschluss-Außenlasche selbst keine Winkellasche mehr auf, so dass eine Verbindung dieser Verschluss-Außenlasche mit der zugeordneten Platte nicht erforderlich ist.

Soweit alternativ vorgesehen sein ist, dass die Innenlaschen und die Außenlaschen beider die Laschenkette bildenden Kettenstränge mit Winkellaschen zum Anschluss der zugeordneten Platte versehen sind, muss im Anschluss an das Einsetzen der Verschluss-Außenlasche in den zugeordneten Kettenstrang noch eine Verbindung der an der betreffenden Verschluss-Außenlasche vorgesehenen Winkellasche mit der Platte erfolgen.

In der Zeichnung sind Ausführungsbeispiele der Erfindung wiedergegeben, welche nachstehend beschrieben sind. Es zeigen:
- Fig. 1: zwei miteinander zusammenzufügende Teilabschnitte eines Plattenbandförderers einschließlich der zugehörigen Verschluss-Außenlasche in deren getrennter Ausgangsstellung in einer Draufsicht auf die Unterseite des Plattenbandförderers,
- Fig. 2: den Gegenstand der Figur 1 nach dem Zusammenfahren der Teilabschnitte und vor dem Einsetzen der Verschluss-Außenlasche,
- Fig. 3: die Laschenkette gemäß Figur 2 mit einseitiger Winkellasche in einer isolierten Darstellung,
- Fig. 4: den Gegenstand der Figur 3 mit beidseitig angeordneten Winkellaschen.

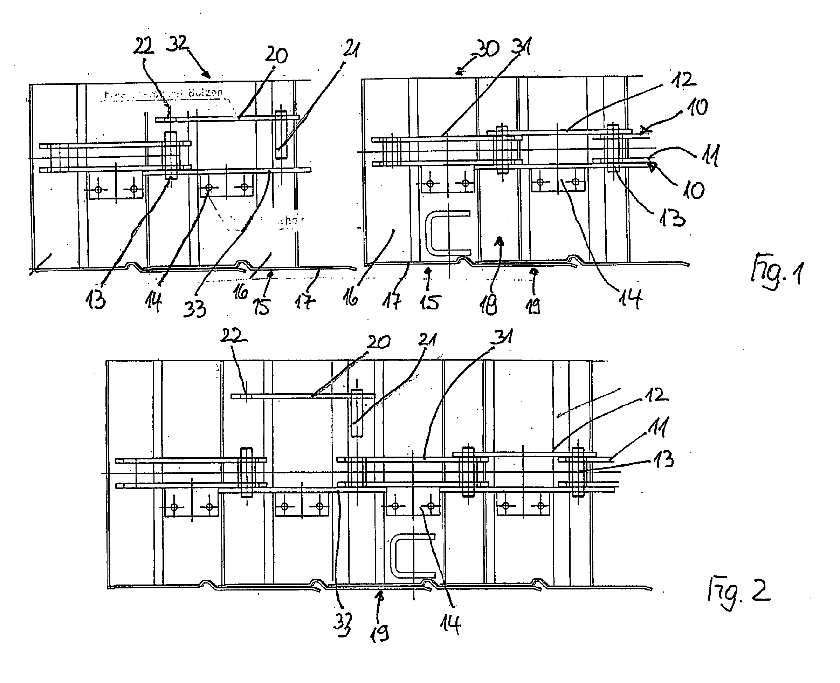

Wie sich zunächst aus Figur 1 ergibt, besteht die die einzelnen Platten 15 des Plattenbandförderers tragende Laschenkette aus zwei parallel zueinander verlaufenden Kettensträngen 10, wobei jeder Kettenstrang aus einer Abfolge von Innenlaschen 11 und Außenlaschen 12 besteht. Die jeweils einander gegenüberliegenden Innenlaschen 11 und Außenlaschen 12 sind durch diese gemeinsam in zugeordneten Öffnungen durchgreifende Kettenbolzen 13 aneinander festgelegt, wobei die Kettenbolzen 13 mit den auf ihnen sitzenden Laschen 11, 12 verpresst sind. Bei dem dargestellten Ausführungsbeispiel sind die fortlaufend angeordneten Innenlaschen 11 und Außenlaschen 12 eines einzelnen Kettenstranges 10 mit Anschlagwinkeln 14 versehen, an denen die den Plattenbandförderer ausbildenden Platten 15 befestigt sind. Die Platten 15 weisen einen Bodenbereich 16 und seitlich vertikal hochstehende Seitenborde 17 auf, wobei sich die einzelnen Platten 15 mit ihrem Bodenbereich 16 und mit ihren Seitenborden 17 überlappen. In den Abmessungen bestehen aber zwischen den Bodenbereichen 16 und den Seitenborden 17 jeder einzelnen Platte 15 Unterschiede, so dass der Überlappungsbereich 18 der zugeordneten Bodenbereiche 16 schmaler ist als der Überlappungsbereich 19 der Seitenborde 17. Die Seitenborde 17 sind zusätzlich mit Prägungen versehen, um eine abdichtende Anlage aneinander auszubilden.

Der in Figur 1 dargestellte rechte Teilabschnitt eines Plattenbandförderers hat ein erstes Endglied 30, welches zwei parallel angeordnete und somit den beiden Kettensträngen 10 zugeordnete abragende Innenlaschen 31 aufweist, wobei die Innenlaschen 31 eine Platte 15 tragen; die dem Kettenstrang mit den an den Laschen 11, 12 angeordneten Anschlagwinkeln 14 zugehörige Innenlasche 31 ist ebenfalls mit einem Anschlagwinkel 14 versehen.

Der mit diesem rechten Endglied 30 zu verbindende gegenüberliegende, auf der linken Seite der Zeichnung dargestellte Teilabschnitt weist ein zweites Endglied 32 auf, welches eine nur einem Kettenstrang 10 zugeordnete End-Außenlasche 33 aufweist, die mit ihrem einen Ende an dem letzten Kettenbolzen 13 des Endgliedes 32 angeschlossen ist und somit frei abragt, wobei diese End-Außenlasche 33 ebenfalls eine zugeordnete Platte 15 trägt.

In der Zeichnung ist weiterhin die zugehörige Verschluss-Außenlasche 20 dargestellt, die an ihrem einen Ende eine Öffnung 22 zum Aufsetzen auf den zugeordneten Kettenbolzen 13 des die abragende Außenlasche 33 aufweisenden zweiten Endgliedes 32 aufweist und an ihrem anderen Ende mit einem eingepressten Kettenbolzen 21 versehen ist, mit welchem die Verschluss-Außenlasche nach dem Zusammenfahren der beiden Endglieder 30 und 32 in die abragenden Innenlaschen 31 einsetzbar ist, wobei der Kettenbolzen 21 auch das freie Ende der abragenden Außenlasche 33 erfasst und festlegt.

In Figur 2 ist der Zustand festgestellt, in welchem die beiden Endglieder 30 und 32 in die Stellung zusammengefahren sind, in welcher die Verschluss-Außenlasche 20 eingesetzt werden kann derart, dass die Öffnung 22 auf dem Kettenbolzen 13 des zweiten Endgliedes 32 aufsetzbar ist und der angepresste Kettenbolzen 21 der Verschluss-Außenlasche 20 in die miteinander in Flucht liegenden Öffnungen der abragenden Innenlaschen 31 des ersten Endgliedes 30 und der abragenden Außenlasche 33 des zweiten Endgliedes 32 einsteckbar ist. In dieser in Figur 2 dargestellten Stellung sind die Bodenbereiche 16 und die Seitenborde 17 der jeweiligen Platten 15 der beiden Endglieder 30 und 32 in ihre überlappende Stellung zusammengefahren, so dass sich vor dem Einsetzen der Verschluss-Außenlasche 20 bereits eine genaue Fixierung der Endglieder 30 und 32 zueinander ergibt, die eine Ausrichtung der zugeordneten Überlappungsbereiche 18 und 19 ermöglicht.

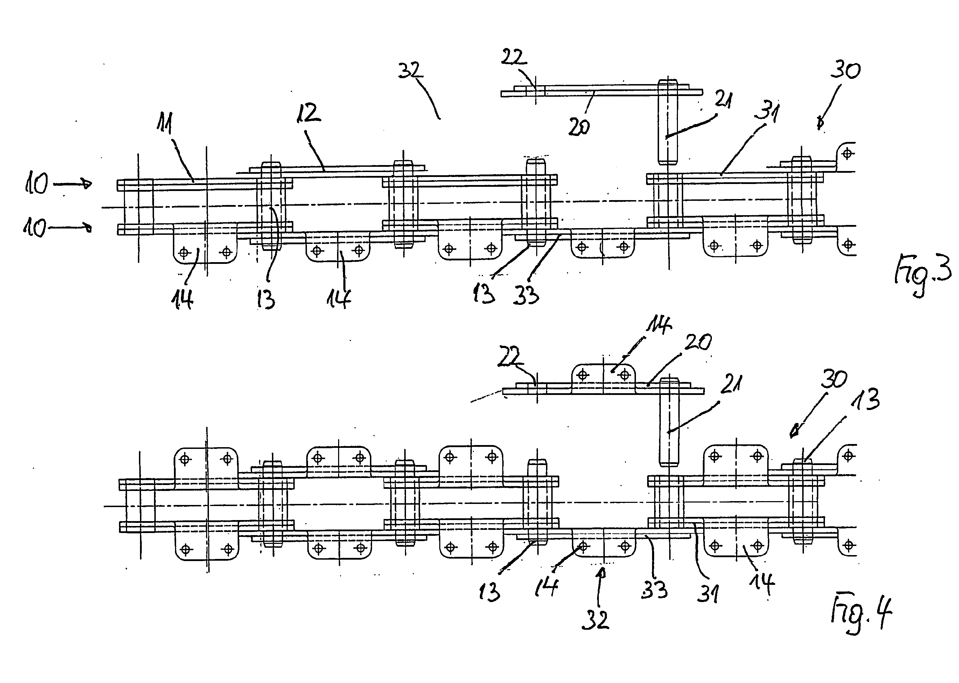

Ein dem in Figur 2 dargestellten Zustand entsprechender Zustand ist in den Figuren 3 und 4 hinsichtlich der zugeordneten Kettenstränge 10 dargestellt, wobei die Ausbildung der Kettenstränge 10 gemäß Figur 3 der Anordnung in Figur 2 mit einseitig angeordneten Winkellaschen 14 entspricht. Bei dem in Figur 4 dargestellten Ausführungsbeispiel sind die Innenlaschen 11 und Außenlaschen 12 beider Kettenstränge 10 jeweils mit Winkellaschen 14 versehen; dies gilt entsprechend auch für die Verschluss-Außenlasche 20, so dass nach dem Zusammenfahren der Endglieder 30 und 32 und dem Einsetzen der Verschluss-Außenlasche 20 in den zugeordneten Kettenstrang 10 die zugehörige Winkellasche 14 der Verschluss-Außenlasche 20 mit der darüber liegenden Platte 15 zu verbinden ist. Aufgrund der Vorfixierung beim Zusammenfahren der Endglieder 30 und 32 stellt die abschließende Verbindung der Verschluss-Außenlasche 30 mit der zugehörigen Platte 15 jedoch keinen aufwendigen Montageschritt mehr dar.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Plattenbandförderer mit von einer Laschenkette getragenen, sich in Förderrichtung des Plattenbandförderers gegenseitig in ihrem Bodenbereich sowie mit ihren vertikal verlaufenden Seitenborden (17) überlappenden und jeweils gleich ausgebildeten Platten (15), wobei die Laschenkette aus zwei parallel zueinander angeordneten und durch jeweils eine Abfolge von Innenlaschen (11) und Außenlaschen (12) gebildeten Kettensträngen (10) besteht und die einander gegenüberliegenden Innenlaschen (11) und Außenlaschen (12) durch jeweils einen gemeinsamen, die Laschen (11, 12) in zugeordneten Öffnungen (22) durchgreifenden Kettenbolzen (13) verbunden sind und die Platten (15) des Plattenbandförderers an den fortlaufenden Innenlaschen (11) und Außenlaschen (12) wenigstens eines der beiden Kettenstränge (10) befestigt sind, **dadurch gekennzeichnet, dass** zur Herstellung eines endlosen Fördererstranges durch Verbindung der Endglieder (30, 32) wenigstens zweier vormontierter Teilabschnitte des Plattenbandförderers das erste Endglied (30) des Teilabschnitts aus zwei parallel abragenden End-Innenlaschen (31) mit der daran befestigten Platte (15) besteht und das damit verbundene zweite Endglied (32) von einer einseitig mit dem Kettenbolzen (13) des zweiten Endgliedes (32) verbundenen, von dem zweiten Endglied (32) einseitig abragenden und mit der zugeordneten Platte (15) vormontierten End-Außenlasche (33) gebildet ist, und dass eine der End-Außenlasche (33) gegenüberliegende Kettenlasche als Verschluss-Außenlasche (20) ausgebildet ist, die mit ihrem einen Ende auf den die End-Außenlasche (33) tragenden Kettenbolzen (13) des zweiten Endgliedes (32) aufsetzbar ist und mit einem an ihrem anderen Ende vormontierten Kettenbolzen (21) die beiden abragenden Innenlaschen (31) des ersten Endgliedes (30) sowie das Ende der abragenden End-Außenlasche (33) des zweiten Endgliedes (32) durchgreift.

2. Plattenbandförderer nach Anspruch 1, **dadurch gekennzeichnet, dass** die fortlaufenden Innenlaschen (11) und Außenlaschen (12) nur eines Kettenstranges (10) mit jeweils einem Anschlagwinkel (14) zum Anschluss einer zugeordneten Platte (15) versehen sind.

3. Plattenbandförderer nach Anspruch 1, **dadurch gekennzeichnet, dass** die Innenlaschen (11) und die Außenlaschen (12) beider die Laschenkette bildenden Kettenstränge (10) mit Anschlagwinkeln (14) zum Anschluss der zugeordneten Platte (15) versehen sind.

## Claims

1. A plate conveyor having identical plates (15) that are supported by a sprocket chain and that in the conveying direction of the plate conveyor have their bases, as well as vertically extending side edges (17) thereof, reciprocally overlap, whereby the sprocket chain is composed of two chain strands (10) that are disposed parallel to one another and are each formed by a sequence of inner link members (11) and outer link members (12), wherein facing ones of the inner link members (11) and outer link members (12) are connected by respective commons link pins (13) that extend through associated openings (22) of the link members, and wherein the plates (15) of the plate conveyor are secured to the successive inner link members (11) and outer link members (12) of at least one of the two chain strands (10), **characterized in that** for the manufacture of an endless conveying strand by connecting the terminal link segments (30, 32) of at least two preassembled portions of the plate conveyor, the first terminal link segment (30) of the portion is comprised of two parallel, outwardly projecting terminal inner link members (31) with the plate (15) secured thereon, and the second terminal link segment (32) that is connected thereto is formed by a preassembled terminal outer link member (33) that is connected at one end with the link pin (13) of the second terminal link segment (32), projects outwardly on one side of the second terminal link segment (32), and has the associated plate (15), and that a chain link member that is disposed across from the terminal outer link member (33) is embodied as an outer closure link member (20), one end of which can be placed on the link pin (13) of the second terminal link segment (32) that carries the terminal outer link member (33), and with a link member (21) that is preassembled on its other end extends through both of the outwardly projecting inner link members (31) of the first terminal link segment (30) as well as the end of the outwardly projecting terminal outer link member (33) of the second terminal link segment (32).

2. Plate Conveyor according to claim 1, **characterized in that** the successive inner link members (11) and outer link members (12) of only one chain strand (10) are provided with a respective bracket (14) for the connection of an associated plate (15).

3. Plate conveyor according to claim 1, **characterized in that** the inner link members (11) and the outer link members (12) of both of the chain strands (10) that form the sprocket chain are provided with brackets (14) for the connection of the associated plate (15).

## Revendications

1. Convoyeur à plateaux, comportant des plateaux (15) supportés par une chaîne articulée, qui sont tous réalisés de manière identique et se chevauchent dans le sens de transport du convoyeur à plateaux réciproquement dans leur zone de fond, ainsi que par leurs bords latéraux (17) orientés dans le sens vertical, sachant que la chaîne articulée est formée par deux branches (10) agencées parallèlement l'une à l'autre et formées chacune par une suite d'éclisses intérieures (11) et d'éclisses extérieures (12), et les éclisses intérieures (11) et les éclisses extérieures (12) respectivement situées face à face sont reliées l'une à l'autre par un boulon (13) commun qui traverse les éclisses (11, 12) dans des orifices (22) appropriés, et les plateaux (15) du convoyeur à plateaux sont fixés sur les éclisses intérieures (11) et éclisses extérieures (12) consécutives d'au moins l'une des deux branches (10) de la chaîne, **caractérisé en ce que** pour la réalisation d'une voie de transport continue par l'assemblage de deux maillons d'extrémité (30, 32) d'au moins deux tronçons partiels pré-assemblés du convoyeur à plateaux, le premier maillon d'extrémité (30) du tronçon partiel est formé par deux éclisses d'extrémité intérieures (31) en saillie parallèlement avec le plateau (15) fixé à celles-ci, et le deuxième maillon d'extrémité (32) est formé par une éclisse extérieure finale (33), qui est reliée d'un côté avec le boulon (13) du deuxième maillon d'extrémité (32) et qui forme saillie sur un côté sur le deuxième maillon d'extrémité (32) et est pré-assemblée au plateau (15) associé, et **en ce qu'**une éclisse située en face de l'éclisse extérieure finale (33) est réalisée sous forme d'éclisse extérieure de fermeture (20), dont une extrémité est destinée à être posée sur le boulon (13) du deuxième maillon d'extrémité (32), lequel porte l'éclisse extérieure finale (33), et avec un boulon (21), pré-assemblé sur l'autre extrémité, passe à travers les deux éclisses d'extrémité intérieures (31) saillantes du premier maillon d'extrémité (30), ainsi qu'à travers l'extrémité de l'éclisse extérieure finale (33) saillante du deuxième maillon d'extrémité (32).

2. Convoyeur à plateaux selon la revendication 1, **caractérisé en ce que** les éclisses intérieures (11) et éclisses extérieures (12) consécutives d'une seule branche (10) de la chaîne sont munies chacune d'une cornière de butée (14) pour le montage d'un plateau (15) correspondant.

3. Convoyeur à plateaux selon la revendication 1, **caractérisé en ce que** les éclisses intérieures (11) et les éclisses extérieures (12) des deux branches (10) formant la chaîne articulée sont munies de cornières de butée (14) pour le montage du plateau (15) correspondant.
